# EUROPEAN PATENT SPECIFICATION

(11) **EP 3 183 623 B1**
(45) Date of publication and mention of the grant of the patent: **10.10.2018**
(21) Application number: 14783766.0
(22) Date of filing: 22.08.2014
(51) Int. Cl.: G05D 11/13, G05D 21/02, G01N 29/14, G01N 29/46

(54) **APPARATUS AND METHOD FOR BLENDING LOOSE ROCK MATERIAL**
VORRICHTUNG UND VERFAHREN ZUM MISCHEN VON LOCKEREM GESTEINSMATERIAL
APPAREIL ET PROCÉDÉ DE MÉLANGE DE MATÉRIAU ROCHEUX EN VRAC

(43) Date of publication of application: 28.06.2017
(73) Proprietor: Knauf Gips KG, 97346 Iphofen (DE); Tipco Tudeshki Industrial Process Control GmbH, 38678 Clausthal-Zellerfeld (DE)
(72) Inventor: VOIGT, Wolfgang, 91593 Burgbernheim (DE); TUDESHKI, Hossein, 38678 Clausthal-Zellerfeld (DE)
(74) Representative: Gleim, Christian Ragnar
(86) International application number: PCT/EP2014/002305
(87) International publication number: WO 2016/026503

(56) References cited:
- WO-A1-02/22246
- WO-A2-00/16092
- US-A1- 2010 082 157
- "Ultrasonic Level measurement in liquids and bulk solids - Vegason 61, 62, 63", , 28 January 2014 (2014-01-28), pages 1-16, XP055181969, Retrieved from the Internet: URL:http://www.vega.com/downloads/PI/EN/29 023-EN.PDF [retrieved on 2015-04-09]

## Description

The present invention relates to an apparatus for blending loose rock material, and a method for blending loose rock material, to provide blended rock material having predetermined portions of different mineral components according to the preamble of the respective independent claim.

"Rock material" as described herein is exemplified by loose sulfate rock material having a changing composition of different mineral components. The loose rock might be of another material. The sulfate rock is found as the naturally occurring mineral rock calcium sulfate dihydrate (CaSO4 • 2H2O), commonly called gypsum, stucco or plaster of Paris, and in the different hydrate stage which is free of water, the anhydrite (CaSO4). The raw gypsum ore is crushed and normally stockpiled near a plant for further processing, i.e. in the manufacture of gypsum wallboards.

The gypsum and anhydrite rock material is a sedimentary rock deposited in thick beds or layers which are exploited in quarries and underground mines. Both minerals gypsum and anhydrite are used in the gypsum industry, e.g. as raw material for gypsum containing products, for controlling the setting times, etc. In natural deposits, a lower stratum of anhydrite is covered by a stratum of gypsum lying on the latter. The thickness and nature of these strata can change enormously. At the interface of adjacent stratas, the rock materials do merge in various formations. Gypsum and anhydrite intermix at the interface of the two different stratas in typical rock formations, i.e. in an anhydrite lens which is a homogeneous "lenticular" anhydrite deposit surrounded by gypsum.

The use of the mixed rock material from the interface is limited since it has no constant mineral composition what might result in a changing chemical characteristic. At the interface of gypsum and anhydrite stratas, the mineral composition is inhomogeneous in the portions of gypsum or anhydrite per volume. The technical fields of use for the individual rock components are distinct. In difference to the pure gypsum or anhydrite found in the individual separate layers, there is only limited use for the "mixed rock". In particular if the portions of the individual mineral compositions change in the mixed rock, the usability is limited to those fields of applications in which the mineral composition does not matter. The limited use leads to a low price for the mixed rock.

To achieve a material mixture of a known homogeneity allows increasing the price per volume of the mined rock material. A predictable homogeneity allows for providing the material for use in more fields of applications. It is known to homogenize the individual mineral components in mixed-bed dumps which are heaped up from different rock materials. The problem is that mixed-bed dumps are associated with high investment and maintenance costs. Moreover, the rock compositions obtained still show great fluctuations in composition.

It is easily conceivable to separate different rock materials by use of a camera arranged at a conveyor which transports the mined rock material. The camera needs to be arranged so as to allow for optically detecting the conveyed material. The minerals are distinguished due to the optical appearance which is detected by the camera. However, this technique is limited to the detection of minerals having dissimilar visual features and is not applicable in case of different minerals of the same visual appearance.

The detection of mineral components in rock material can be carried out by prompt gamma neutron activation analysis (PGNAA) which is already in use in mineral industries and which allows for online analysis of minerals. "Online" means that the minerals (or rock materials) are analyzed while being transported, e.g. on a conveyor belt. Neutron generators are employed in PGNAA-Analysators as a neutron source which is configured for emitting neutrons. A detector is configured to detect the gamma radiation passing into a measuring space which is configured for moderating the emitted neutrons. The detector provides an electrical sensor signal which is generated on the basis of the detected material. PGNAA-Analysators have the disadvantage that the measurement space is limited as well as that they are an expensive investment.

The state of the art disclosed in WO 02/ 22 246 A1 and US 2010/ 082 157 A1 describes an example of a method for blending mineral material using PGNAA-Analysators.

Hence it is an object of the present invention to provide an apparatus capable of, and a method for, blending loose rock material of a changing mineral composition which overcomes or at least greatly reduces the disadvantages known from the prior art, what means that the apparatus needs to provide rock material in a constant blend at low investment costs.

This object is achieved by the apparatus for blending loose rock material as it is characterized by the features of the independent claim. The method for providing loose rock material also solves the above-mentioned problem. Advantageous embodiments become evident from the features of the respective dependent claims.

In particular an apparatus for blending loose rock material of a changing mineral composition having different mineral components to provide blended rock material having predetermined portions of the different mineral components. The apparatus comprises a conveyor for transporting the loose rock material in a conveying direction and arranged in the conveying direction along the conveyor, a first container capable of depositing the rock material of a changing mineral composition onto the conveyor, a second container and a third container. Both, the second and third container being capable of separately depositing rock material of the different individual rock material components onto the conveyed rock material of a changing mineral composition. The apparatus further comprises an acoustic mineral detector unit, arranged at the conveyor in the conveying direction after the first container and before the second and third container. The acoustic mineral detector unit is capable of detecting the different mineral components of the conveyed rock material of a changing mineral composition and of regulating the quantity of the different individual rock material components being deposited from the second container or the third container based on the detected different components to provide rock material having predetermined portions of the different mineral components.

Thus, the invention provides an apparatus for blending loose rock material of a changing mineral composition having different mineral components to provide blended rock material having predetermined portions of the different mineral components. The apparatus is capable of acoustically detecting the sound of the impact of the transported rocks of the individual minerals colliding at the detector and to control the volume/mass of specific mineral rocks deposited on the conveyor. The sound is specific for each mineral since the collision depends on the mineral and physical properties, like specific mineral weight or density. Each mineral has a specific sound during its impact at the detector. The detected signal shows different frequencies for each specific material, wherein via the signal strength and the frequencies, the material distribution at the conveyor can be determined. The term "predetermined" is to be understood to comprise any blend which can be used for further processing of the rock material (i.e. 50% rock material of the first mineral component and 50% rock material of the second mineral component).

An example for the "loose rock material" is a mixture of rocks having a mineral composition which comprises gypsum (CaSO4 • 2H2O) rocks and anhydrite (CaSO4) rocks. The deposition of the rock material of a changing mineral composition or of the different individual rock materials can be carried out by a separate opening in the respective container, wherein the term "separate" means that each individual rock material can be provided in a specific volume to achieve the required composition. The openings are controlled by the acoustic mineral detector unit which comprises the detector and a control means. The control means controls based on the detected different components, the volume of the provided respective rock material. Providing "individual rock material" is to be understood that one kind of rock material can be provided without the other. An alternative mode of operation is to keep one component constantly as low as possible by only providing one component in a maximum volume flow. The predetermined portions may change during operation.

According to one aspect, the acoustic mineral detector unit comprises an acoustical detector capable of detecting different material components of loose rock material by acoustically sensing friction sound waves caused by colliding relatively moving loose rock material. Sensing the friction sound and compare the detected noise to reference friction sound noise measurements for known rock materials is advantageous since the friction sound can be achieved on operating conveyors (e.g. by dropping the rock material from one conveyor band to another).

In another aspect, the acoustical detector comprises a piezoelement capable converting the mechanical energy of friction sound waves into an electric output signal.

According to one further aspect, the acoustic mineral detector unit comprises a control unit, the control unit being capable of processing the electric output signal of the piezoelement for controlling the second container and the third container to allow for regulating the quantity of the deposited different individual rock material components based on the detected different mineral components.

The apparatus advantageously further comprises at least one additional container being arranged at the conveyor in the conveying direction C after the first container and being capable of separately depositing rock material of at least one further different individual rock material component onto the conveyed rock material. Each additional container allows for a further different individual mineral component by separately depositing the further individual rock material.

According to one aspect, at least one of the first container, the second container, the third container or the at least one further container comprises a closable opening for depositing the rock material, each closable opening being individually activated by the control unit. The closable opening allows for controlling the volume flow of the respective individual rock material out of the container onto the conveyor, or more precisely onto the conveyed material.

Another aspect relates to that at least one of the first container, the second container, the third container or the at least one further container comprises conveying means to allow for transporting the rock material to be deposited. For example, the conveying means can be a band conveyor from which the individual rock material is directly deposited onto the conveyor. This allows for controlling the blend of provided rock material by adapting the relative conveying speeds.

One further aspect relates to that at least one of the first container, the second container, the third container or the at least one further container comprises a stone crusher to allow for depositing rock material of a uniform rock size. The crushed rock can be provided in precise volumes for achieving the predetermined blend.

Preferably, the conveyor is a band conveyor having a conveying band for transporting rock material.

In one advantageous aspect, the loose rock material of a changing mineral composition comprises the mineral gypsum and the mineral anhydrite. In a specific example, the second container is filled with gypsum and the third container with anhydrite. The detected mineral proportion gypsum/anhydrite allows adding the individual rock material from the respective container. That means if blended rock material having predetermined portions of 50% gypsum and 50% anhydrite is to be provided and the loose rock material has a detected mineral composition of 25% gypsum and 75% anhydrite, gypsum needs to be added out of the second container. The present example only illustrates how the mixtures can be provided without limitation to specific values.

According to a further aspect of the invention, a method is provided for blending loose rock material of a changing mineral composition having different mineral components to provide blended rock material having predetermined portions of the different mineral components. The method comprises the following steps. Convey rock material of a changing mineral composition of different mineral components. Acoustically detect the portion of the different mineral components in the conveyed rock material. Based on the detected portion of the different mineral components, separately deposit onto the conveyed rock material a volume of individual rock material of one of the different mineral components to provide rock material of predetermined portions of the different mineral components.

It is preferred if acoustically detecting the portion of the different mineral components comprises conveying the rock material in a manner so as to cause friction sound. For example, the friction sound waves can be achieved by letting the rocks fall onto each other.

According to a further aspect, the step of separately depositing onto the conveyed rock material a volume of individual rock material of one of the different mineral components is carried out continuously. This can be achieved by use of a continuous conveyor as container.

Further advantageous aspects of the apparatus and method according to the invention become evident by the following detailed description of the specific embodiments with the aid of the drawings, in which:
- Fig. 1: shows a natural gypsum/anhydrite deposit;
- Fig. 2: shows an apparatus according to a first embodiment of the invention having a second and a third container only;
- Fig. 3: shows the apparatus of fig. 2 in use in a first state of operation;
- Fig. 4: shows the apparatus of fig. 2 in use in a second state of operation;
- Fig. 5: shows an apparatus according to a second embodiment of the invention having a second and a third container only;
- Fig. 6: shows a detected signal Noise-Intensity over Frequency;
- Fig. 7: shows a detected signal Incidency over Noise-Intensity.

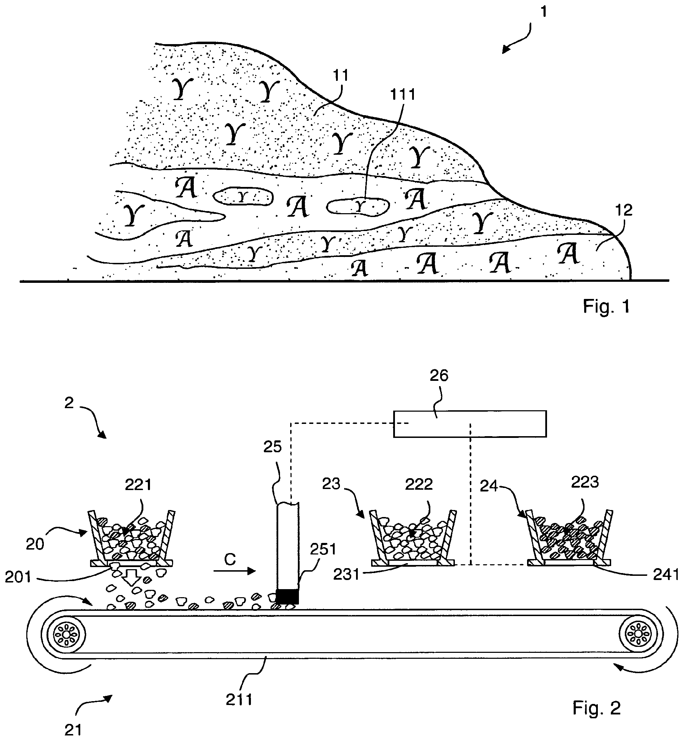

Gypsum Y is chemically a salt which was dissolved in the seawater. When seawater evaporates, the salts excrete and are deposited in the residual water. Initially, the less soluble carbonates (not shown as sediment in the present illustration) are excreted and with further evaporation follows gypsum Y. Over geological time periods, sediments are deposited onto the gypsum and the pressure of this sediment material (i.e. clay stone), converts the gypsum Y by "squeezing of" water to anhydrite A. **Fig. 1** is an illustration of a natural deposit 1 of the rock minerals gypsum Y / anhydrite A. A lower stratum of anhydrite 12 is covered by a stratum of gypsum 11 lying on the latter, wherein the thickness of both can change enormously. The stratum of gypsum 11 and the stratum of anhydrite 12 intermix at their interface in typical mixed rock formations, i.e. in an anhydrite lens 111 which is a homogeneous "lenticular" anhydrite A deposit surrounded by gypsum Y.

The rock material mined at the gypsum-anhydrite interface has unknown portions of both minerals gypsum and anhydrite. The limitations for the use of rock material of an unknown composition are discussed in the introductory part. The apparatus according to **Fig. 2** allows for providing rock material in a uniform blended composition at low investment costs. The apparatus 2 has a second container 23 and a third container 24, each of which allows for separately providing rock material of the individual mineral component either gypsum 222 or anhydrite 223. The apparatus 2 comprises a band conveyor 21 for transporting the loose rock material 221 on a conveyor band 211 in a conveying direction C. A first container 20, the second container 23 and the third container 24 are arranged above the conveyor band 211. In between of the first container 20 at the one side and the second and third container 23, 24 on the other side, the apparatus 2 comprises an acoustic mineral detector unit 25. The acoustic mineral detector unit 25 has an acoustic detector 25 and a control unit 26 which opens the opening of the second container 23 or third container 24. The acoustic mineral detector unit 25 comprises a piezoelement 251 which senses the friction sound of the conveyed rock material.

In operation the loose rock material 221 with unknown portions of gypsum and anhydrite is deposited out of the first container 20 via the first container opening 201 onto the conveyor band 211. The rock material 221 is transported in the conveying direction C. The transported rock material 221 passes the acoustic detector 25 of the acoustic mineral detector unit 25 which senses the friction sound of the transported material. In accordance with the detected signal, a control unit 26 activates the respective second container opening 231 or third container opening 231. In the third and second container 23, 24 is gypsum rock material and anhydrite rock material individually stored and can be provided in a required volume. The required volume changes with the predetermined blend (e.g. 50% gypsum / 50% anhydrite or 40% gypsum / 60% anhydrite) which is needed for a specific use of the blended rock material 224. Hence, the apparatus 2 is capable of acoustically detecting the sound of the transported rock material 221 and to control the volume/mass of specific mineral rocks 223, 224 which is to be deposited onto the conveyor.

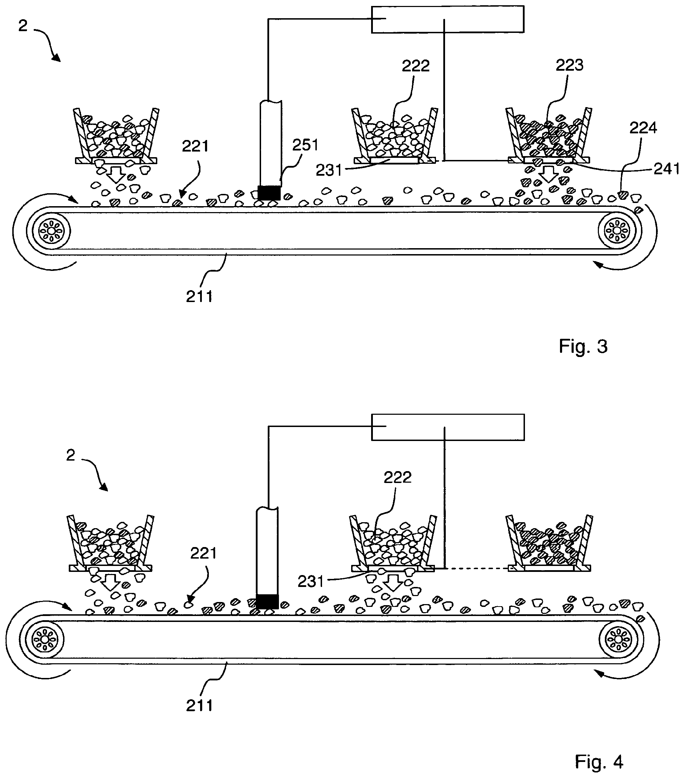

The operation of the apparatus 2 of Fig. 2 is further exemplified in two different states of operation shown in Fig. 3 and Fig. 4. In **Fig. 3****,** the rock material 221 is deposited onto the conveyor 21. The rock material 221 comprises gypsum and anhydrite which are illustrated as differently hatched, wherein un-hatched rocks illustrate gypsum 222 and the hatched rocks illustrate anhydrite 223. The transported rock material 221 passes the piezoelement 251 (no additional means to cause friction noise are shown) which detects an excess of gypsum 222 so that anhydrite 223 is deposited out of the third container opening 241 to provide the rock material of the predetermined composition 224. In **Fig. 4****,** a different state of operation state is shown, in which the rock material 221 which is transported at the conveyor 21 comprises an excess of anhydrite 223 so that gypsum 222 is deposited via the second container opening 231 onto the conveyor band 211.

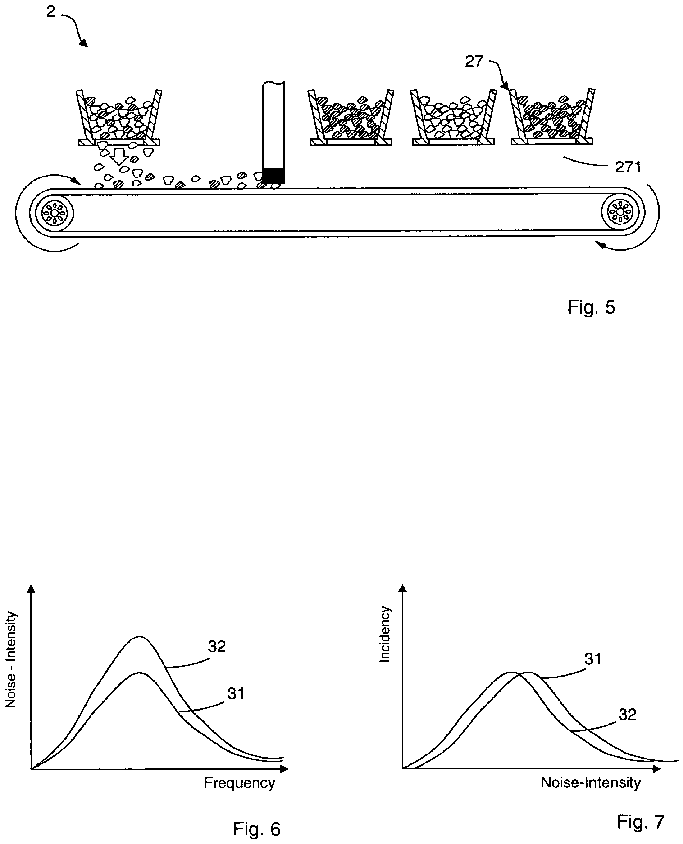

In **Fig. 5** an additional embodiment of the above-described apparatus 2 is shown in which the apparatus 2 comprises an additional container 27 with a further container opening 271. This embodiment allows adding at least one further mineral rock material or to increase the provided volume of one of the mineral components. The one additional container can be a plurality of containers, each of which allowing to add a further mineral component.

**Fig. 6** shows a detected signal noise-intensity over frequency. The Anhydrite curve 32 is above the gypsum curve 31. **Fig. 7** shows a detected signal incidency over noise-intensity, wherein the anhydrite curve 32 is the right curve and the gypsum curve 31 is the left curve.

## Claims

1. Apparatus (2) for blending loose rock material (221) of a changing mineral composition having different mineral components (222, 223) to provide blended rock material (224) having predetermined portions of the different mineral components (222, 223), the apparatus (2) comprising
a conveyor (21) for transporting the loose rock material (221) in a conveying direction (C) and **characterized by**, arranged in the conveying direction (C) along the conveyor (21),
a first container (20) capable of depositing the loose rock material (221) of a changing mineral composition onto the conveyor (21),
a second container (23) and
a third container (24), both the second and third container being capable of separately depositing rock material of the different individual rock material components (222, 223) onto the conveyed rock material (221), wherein the apparatus (2) further comprises an acoustic mineral detector unit (25), arranged at the conveyor (21) in the conveying direction (C) after the first container (20) and before the second and third container (23, 24), the acoustic mineral detector unit (25) being capable of detecting the portions of the different mineral components (222, 223) in the conveyed rock material (221) and of regulating the quantity of the different individual rock material (222, 223) separately deposited from the second or the third container based on the detected portions to provide rock material (224) having predetermined portions of the different mineral components.

2. Apparatus (2) according to claim 1, wherein the acoustic mineral detector unit (25, 26) comprises an acoustic detector (25) capable of distinguishing different mineral components (222, 223) of loose rock material by acoustically sensing friction sound waves of colliding loose rock material rocks.

3. Apparatus (2) according to claim 2, wherein the acoustical detector (25) comprises a piezoelement (251) capable converting the mechanical energy of friction sound waves into an electric output signal.

4. Apparatus (2) according to claim 3, wherein the acoustic mineral detector unit (25, 26) comprises a control unit (26), the control unit (26) being capable of processing the electric output signal of the piezoelement (251) for controlling the second container (23) and the third container (24) to allow for regulating the quantity of the deposited different individual rock material components (222, 223) based on the detected different mineral components.

5. Apparatus (2) according to anyone of the preceding claims, further comprising at least one additional container (27) being arranged at the conveyor (21) in the conveying direction (C) after the first container (20) and being capable of separately depositing rock material (227) of at least one further different individual mineral component onto the conveyed rock material (221).

6. Apparatus (2) according to claim 4 or 5, wherein at least one of the first container (20), the second container (23), the third container (24) or the at least one further container (27) comprises a closable opening (201, 231, 241, 271) for depositing the rock material, each closable opening (201, 231, 241, 271) being individually activated by the control unit (26).

7. Apparatus (2) according to claim 4 to 6, wherein at least one of the first container (20), the second container (23), the third container (24) or the at least one further container (27) comprises conveying means to allow for transporting the rock material (221, 222, 223, 227) to be deposited.

8. Apparatus (2) according to claim 4 to 7, wherein at least one of the first container (20), the second container (23), the third container (24) or the at least one further container (27) comprises a stone crusher to allow for depositing rock material of a uniform rock size.

9. Apparatus (2) according to anyone of the preceding claims, wherein the conveyor (21) is a band conveyor having a conveying band (211) for transporting rock material.

10. Apparatus (2) according to anyone of the preceding claims, wherein the loose rock material (221) of a changing mineral composition comprises the mineral gypsum (222) and the mineral anhydrite (223).

11. Method for blending loose rock material (221) of a changing mineral composition having different mineral components to provide blended rock material (224) having predetermined portions of the different mineral components, the method comprising the following steps of:
- conveying the loose rock material (221) of a changing mineral composition having different mineral components; **characterized in** the steps of
- acoustically detecting the portion of the different mineral components in the conveyed rock material (221); and
- based on the detected portion of the different mineral components, separately depositing onto the conveyed rock material (221) a volume of individual rock material (222, 223) of one of the different mineral components to provide rock material (224) having predetermined portions of the different mineral components.

12. Method according to claim 11, wherein the step of acoustically detecting the portion of the different mineral components comprises conveying the rock material (221) in a manner so as to cause friction sound waves.

13. Method according to claim 11 or 12, wherein the step of separately depositing onto the conveyed rock material (221) a volume of individual rock material (222, 223) of one of the different mineral components is carried out continuously.

## Patentansprüche

1. Vorrichtung (2) zum Mischen von losem Gesteinsmaterial (221) mit einer wechselnden mineralischen Zusammensetzung, die unterschiedliche mineralische Bestandteile (222, 223) aufweist, um gemischtes Gesteinsmaterial (224) bereitzustellen, das vorherbestimmte Bereiche mit den unterschiedlichen mineralischen Bestandteilen (222, 223) aufweist, wobei die Vorrichtung (2) umfasst:
eine Fördereinrichtung (21) zum Transportieren des losen Gesteinsmaterials (221) in einer Förderrichtung (C) und **dadurch gekennzeichnet, dass**
es in der Förderrichtung (C) entlang der Fördereinrichtung (21) angeordnet ist,
einen ersten Behälter (20), der in der Lage ist, das lose Gesteinsmaterial (221) mit einer wechselnden mineralischen Zusammensetzung auf der Fördereinrichtung (21) abzulegen,
einen zweiten Behälter (23) und
einen dritten Behälter (24), wobei sowohl der zweite als auch der dritte Behälter in der Lage sind, Gesteinsmaterial mit den unterschiedlichen einzelnen Gesteinsmaterialbestandteilen (222, 223) auf dem beförderten Gesteinsmaterial (221) einzeln abzulegen, wobei die Vorrichtung (2) ferner eine akustische Mineraldetektoreinheit (25) umfasst, die an der Fördereinrichtung (21) in der Förderrichtung (C) hinter dem ersten Behälter (20) und vor dem zweiten und dritten Behälter (23, 24) angeordnet ist, wobei die akustische Mineraldetektoreinheit (25) in der Lage ist, die Bereiche mit den unterschiedlichen mineralischen Bestandteilen (222, 223) in dem beförderten Gesteinsmaterial (222, 223) zu detektieren und die Menge des unterschiedlichen einzelnen Gesteinsmaterials (222, 223), das aus dem zweiten oder dem dritten Behälter einzeln abgelegt wird, auf der Grundlage der detektierten Bereiche zu regeln, um Gesteinsmaterial (224) bereitzustellen, das vorherbestimmte Bereiche mit den unterschiedlichen mineralischen Bestandteilen aufweist.

2. Vorrichtung (2) nach Anspruch 1, wobei die akustische Mineraldetektoreinheit (25, 26) einen akustischen Detektor (25) umfasst, der in der Lage ist, unterschiedliche mineralische Bestandteile (222, 223) von losem Gesteinsmaterial durch akustisches Erfassen von Reibungsschallwellen von zusammenstoßenden losen Gesteinsmaterialbrocken zu unterscheiden.

3. Vorrichtung (2) nach Anspruch 2, wobei der akustische Detektor (25) ein Piezoelement (251) umfasst, das in der Lage ist, die mechanische Energie von Reibungsschallwellen in ein elektrisches Ausgangssignal umzuwandeln.

4. Vorrichtung (2) nach Anspruch 3, wobei die akustische Mineraldetektoreinheit (25, 26) eine Steuereinheit (26) umfasst, wobei die Steuereinheit (26) in der Lage ist, das elektrische Ausgangssignal des Piezoelements (251) zum Steuern des zweiten Behälters (23) und des dritten Behälters (24) zu verarbeiten, um Regeln der Menge der abgelegten unterschiedlichen einzelnen Gesteinsmaterialbestandteile (222, 223) auf der Grundlage der detektierten unterschiedlichen mineralischen Bestandteile zu ermöglichen.

5. Vorrichtung (2) nach einem der vorangehenden Ansprüche, ferner umfassend zumindest einen zusätzlichen Behälter (27), der an der Fördereinrichtung (21) in der Förderrichtung (C) hinter dem ersten Behälter (20) angeordnet ist und in der Lage ist, Gesteinsmaterial (227) mit zumindest einem weiteren unterschiedlichen einzelnen mineralischen Bestandteil auf dem beförderten Gesteinsmaterial (221) abzulegen.

6. Vorrichtung (2) nach Anspruch 4 oder 5, wobei zumindest einer des ersten Behälters (20), des zweiten Behälters (23), des dritten Behälters (24) oder des zumindest einen weiteren Behälters (27) eine verschließbare Öffnung (201, 231, 241, 271) zum Ablegen des Gesteinsmaterials umfasst, wobei jede verschließbare Öffnung (201, 231, 241, 271) durch die Steuereinheit (26) einzeln aktiviert wird.

7. Vorrichtung (2) nach Anspruch 4 bis 6, wobei zumindest einer des ersten Behälters (20), des zweiten Behälters (23), des dritten Behälters (24) oder des zumindest einen weiteren Behälters (27) ein Fördermittel umfasst, um Transportieren des abzulegenden Gesteinsmaterials (221, 222, 223, 227) zu ermöglichen.

8. Vorrichtung (2) nach Anspruch 4 bis 7, wobei zumindest einer des ersten Behälters (20), des zweiten Behälters (23), des dritten Behälters (24) oder des zumindest einen weiteren Behälters (27) einen Steinzerkleinerer umfasst, um Ablegen von Gesteinsmaterial mit einer gleichmäßigen Gesteinsgröße zu ermöglichen.

9. Vorrichtung (2) nach einem der vorangehenden Ansprüche, wobei die Fördereinrichtung (21) ein Bandförderer ist, der ein Förderband (221) zum Transportieren von Gesteinsmaterial aufweist.

10. Vorrichtung (2) nach einem der vorangehenden Ansprüche, wobei das lose Gesteinsmaterial (221) mit einer wechselnden mineralischen Zusammensetzung das Mineral Gips (222) und das Mineral Anhydrit (223) umfasst.

11. Verfahren zum Mischen von losem Gesteinsmaterial (221) mit einer wechselnden mineralischen Zusammensetzung, die unterschiedliche mineralische Bestandteile aufweist, um gemischtes Gesteinsmaterial (224) bereitzustellen, das vorherbestimmte Bereiche mit den unterschiedlichen mineralischen Bestandteilen aufweist, wobei das Verfahren die folgenden Schritte umfasst:
- Befördern des losen Gesteinsmaterials (221) mit einer wechselnden mineralischen Zusammensetzung, die unterschiedliche mineralische Bestandteile aufweist, **gekennzeichnet durch** die Schritte:
- akustisches Detektieren des Bereichs mit den unterschiedlichen mineralischen Bestandteilen im beförderten Gesteinsmaterial (221); und
- auf der Grundlage des detektierten Bereichs mit den unterschiedlichen mineralischen Bestandteilen, einzelnes Ablegen auf dem beförderten Gesteinsmaterial (221) eines Volumens von einzelnem Gesteinsmaterial (222, 223) mit einem der unterschiedlichen mineralischen Bestandteile, um Gesteinsmaterial (224) bereitzustellen, das vorherbestimmte Bereiche mit den unterschiedlichen mineralischen Bestandteilen aufweist.

12. Verfahren nach Anspruch 11, wobei der Schritt des akustischen Detektierens des Bereichs mit den unterschiedlichen mineralischen Bestandteilen das Befördern des Gesteinsmaterials (221) in einer solchen Weise umfasst, dass Reibungsschallwellen erzeugt werden.

13. Verfahren nach Anspruch 11 oder 12, wobei der Schritt des einzelnen Ablegens auf dem beförderten Gesteinsmaterial (221) eines Volumens von einzelnem Gesteinsmaterial (222, 223) mit einem der unterschiedlichen mineralischen Bestandteile kontinuierlich durchgeführt wird.

## Revendications

1. Appareil (2) de mélange de matière rocheuse en vrac (221) d'une composition minérale variable présentant différents composants minéraux (222, 223) pour obtenir de la matière rocheuse mélangée (224) ayant des parties prédéterminées des différents composants minéraux (222, 223), l'appareil (2) comprenant:
un transporteur (21) destiné à transporter de la matière rocheuse en vrac (221) dans une direction de transport (C) et **caractérisé en ce que**
celle-ci est agencée dans la direction the transport (C) le long du transporteur (21),
un premier récipient (20) étant capable de déposer de la matière rocheuse en vrac (221) d'une composition minérale variable sur le transporteur (21),
un second récipient (23) et
un troisième récipient (24), le second et le troisième récipient étant capables de déposer de manière séparée de la matière rocheuse des différents composants individuels de la matière rocheuse (222, 223) sur la matière rocheuse (221) transportée, dans lequel l'appareil (2) comprend en plus une unité détectrice de minéraux acoustique (25) étant agencée au niveau du transporteur (21) dans la direction de transport (C) derrière le premier récipient (20) et avant le second et le troisième récipient (23, 24), l'unité détectrice de minéraux acoustique (25) étant capable de détecter les parties des différents composants minéraux (222, 223) dans la matière rocheuse (221) transportée et de réguler la quantité de la différente matière rocheuse (222, 223) individuelle déposée de manière séparée à partir du premier ou troisième récipient sur la base des parties détectées afin d'obtenir de la matière rocheuse (224) présentant des parties prédéterminées des différents composants minéraux.

2. Appareil (2) selon la revendication 1, dans lequel l'unité détectrice de minéraux acoustique (25, 26) comprend un détecteur acoustique (25) étant capable de distinguer différents composants minéraux (222, 223) de la matière rocheuse en vrac par détection de manière acoustique d'ondes sonores à friction des roches de la matière rocheuse qui entrent en collision.

3. Appareil (2) selon la revendication 2, dans lequel le détecteur acoustique (25) comprend un élément piézoélectrique (251) permettant de convertir de l'énergie mécanique d'ondes sonores à friction en un signal électrique de sortie.

4. Appareil (2) selon la revendication 3, dans lequel l'unité détectrice de minéraux acoustique (25, 26) comprend une unité de commande (26), ladite unité de commande (26) étant capable de traiter le signal électrique de sortie de l'élément piézoélectrique (251) pour commander le second récipient (23) et le troisième récipient (24) afin de permettre la régulation de la quantité des différents composants individuels de la matière rocheuse (222, 223) déposée sur la base des différents composants minéraux détectés.

5. Appareil (2) selon l'une quelconque des revendications précédentes, en outre comprenant au moins un récipient supplémentaire (27) étant agencé au niveau du transporteur (21) dans la direction de transport (C) derrière le premier récipient (20) et permettant de déposer de manière séparée de la matière rocheuse (227) d'au moins un autre différent composant minéral sur la matière rocheuse (221) transportée.

6. Appareil (2) selon la revendication 4 ou 5, dans lequel au moins l'un du premier récipient (20), du second récipient (23), du troisième récipient (24) ou d'au moins un autre récipient (27) comprend une ouverture fermable (201, 231, 241, 271) pour déposer de la matière rocheuse, chaque ouverture fermable (201, 231, 241, 271) étant activée de manière individuelle par l'unité de commande (26).

7. Appareil (2) selon la revendication 4 à 6, dans lequel au moins un du premier récipient (20), du second récipient (23), du troisième récipient (23) ou d'au moins un autre récipient (27) comprend un moyen de transport permettant de transporter de la matière rocheuse (221, 222, 223, 227) à déposer.

8. Appareil (2) selon la revendication 4 à 7, dans lequel au moins un du premier récipient (20), du second récipient (23), du troisième récipient (23) ou d'au moins un autre récipient (27) comprend un broyeur de pierres permettant de déposer de la matière rocheuse d'une taille de roches uniforme.

9. Appareil (2) selon l'une quelconque des revendications précédentes, dans lequel le transporteur (21) est un convoyeur à bande présentant une bande de transport (211) pour transporter de la matière rocheuse.

10. Appareil (2) selon l'une quelconque des revendications précédentes, dans lequel la matière rocheuse en vrac (221) d'une composition minérale variable comprend le minéral de plâtre (222) et le minéral d'anhydrite (223).

11. Procédé pour mélanger de la matière rocheuse en vrac (221) d'une composition minérale variable présentant différents composants minéraux pour obtenir de la matière rocheuse mélangée (224) présentant des parties prédéterminées des différents composants minéraux, le procédé comprenant les étapes suivantes:
- transporter de la matière rocheuse en vrac (221) d'une composition minérale variable présentant différents composants minéraux; **caractérisé, par** les étapes consistant à
- détecter de manière acoustique la partie des différents composants minéraux dans la matière rocheuse (221) transportée; et
- sur la base de la partie détectée des différents composants minéraux, déposer de manière séparée sur la matière rocheuse (221) transportée un volume de la matière rocheuse (222, 223) individuelle de l'un des différents composants minéraux pour obtenir de la matière rocheuse (224) présentant des parties prédéterminées des différents composants minéraux.

12. Procédé selon la revendication 11, dans lequel l'étape de détecter de manière acoustique la partie des différents composants minéraux comprend le transport de la matière rocheuse (221) de manière à provoquer d'ondes sonores à friction.

13. Procédé selon la revendication 11 ou 12, dans lequel l'étape de déposer de manière séparée sur la matière rocheuse (221) transportée un volume de la matière rocheuse (222, 223) individuelle de l'un des différents composants minéraux est effectuée en continu.
